# FASCICULE DE BREVET EUROPEEN

(11) **EP 3 503 483 B1**
(45) Date de publication et mention de la délivrance du brevet: **23.09.2020**
(21) Numéro de dépôt: 18209705.5
(22) Date de dépôt: 03.12.2018
(51) Int. Cl.: H04L 12/741, H04L 29/12

(54) **PROCÉDÉ ET SERVEUR D'ATTRIBUTION D'ADRESSES TOPOLOGIQUES À DES COMMUTATEURS DE RÉSEAU, PROGRAMME D'ORDINATEUR ET GRAPPE DE SERVEURS CORRESPONDANTS**
VERFAHREN UND SERVER ZUR VERGABE VON TOPOLOGISCHEN ADRESSEN AN NETZWERK-SWITCHES, ENTSPRECHENDES COMPUTERPROGRAMM UND ENTSPRECHENDE SERVERFARM
TOPOLOGICAL ADDRESS ASSIGNMENT METHOD AND SERVER WITH NETWORK SWITCHES, COMPUTER PROGRAM AND CORRESPONDING SERVER CLUSTER

(30) Priorité: 21.12.2017 FR 1762750
(43) Date de publication de la demande: 26.06.2019
(73) Titulaire: BULL SAS, 78340 Les Clayes Sous Bois (FR)
(72) Inventeur: CADY, Alain, 91940 Les Ulis (FR)
(74) Mandataire: Bonnet, Michel

(56) Documents cités:
- WO-A1-2016/070813
- ZAHAVI E: "D-Mod-K Routing Providing Non-Blocking Traffic for Shift Permutations on Real Life Fat Trees", INTERNET CITATION, 1 septembre 2010 (2010-09-01), pages 1-7, XP002686713, Extrait de l'Internet: URL:http://webee.technion.ac.il/publicatio n-link/index/id/574 [extrait le 2012-11-06]

## Description

La présente invention concerne un procédé d'attribution automatique d'adresses topologiques individuelles à des commutateurs réseau d'un réseau comportant des segments de transmission, lesdits commutateurs réseau interconnectés par ces segments de transmission et des nœuds de calcul ou service connectés à des ports d'au moins une partie des commutateurs réseau. Elle concerne également un programme d'ordinateur et un serveur d'attribution d'adresses topologiques pour la mise en œuvre de ce procédé, ainsi qu'une grappe de serveurs comportant un tel serveur.

Elle s'applique aux réseaux complexes tels que les grappes de serveurs mais pas uniquement. Il est vrai cependant que pour les grappes de serveurs, comportant souvent un grand nombre de nœuds de calcul et service interconnectés entre eux par au moins un réseau de transmission de signaux et données, via un ensemble de commutateurs formant les nœuds de transmission du réseau, l'adressage des commutateurs est un problème sensible qui peut s'avérer complexe en fonction de la topologie du réseau. Les grappes de serveurs sont des installations informatiques comprenant généralement plusieurs ordinateurs puissants en réseau, avec un stockage partagé en baies de stockage, apparaissant de l'extérieur comme un calculateur à très forte puissance de calcul, dit calculateur à haute performance de traitement ou calculateur HPC (de l'Anglais « High Performance Computing »). Ces installations optimisées permettent la répartition de traitements complexes et/ou de calculs parallèles sur au moins une partie des nœuds de calcul. Il est avantageux d'attribuer aux commutateurs des adresses qui reflètent la topologie de ces réseaux.

Cependant, les topologies des réseaux de nœuds de calcul et service, notamment des calculateurs HPC, sont très variées et peuvent être structurées selon un certain formalisme mathématique, comme pour les réseaux topologiquement hiérarchisés en « Fat-Trees » tels que les réseaux XGFT (de l'anglais « eXtended Generalized Fat-Trees ») et PGFT (de l'anglais « Parallel ports Generalized Fat-Trees »), ou comme pour les réseaux maillés ou en tores 3D. Elles peuvent également être non structurées lorsqu'aucun formalisme mathématique préétabli n'est susceptible de décrire leur organisation.

Selon un autre aspect, les topologies de ces réseaux peuvent être qualifiées de directes, lorsque chaque commutateur a au moins un port connecté à au moins un nœud de calcul ou service, ou d'indirectes, lorsque seul certains commutateurs ont au moins un port connecté à au moins un nœud de calcul ou service. En topologie indirecte, le fait que l'accès aux nœuds de calcul ou service se fasse à partir des commutateurs selon des distances inégales en termes de commutateurs à traverser pour atteindre ces nœuds instaure au moins implicitement une hiérarchie et des différences de niveaux entre les commutateurs. Mais même en topologie directe, des différences de niveaux peuvent être définies, par exemple en fonction d'une distribution géographique des commutateurs (en plans, lignes, colonnes, ...), ou de toute autre hiérarchisation possible des commutateurs.

Dans ce contexte, il est avantageux d'attribuer une adresse topologique à chaque commutateur du réseau non seulement en fonction d'identifiants qui lui sont propres, mais également en fonction d'un identifiant de niveau dans lequel il se situe dans le réseau.

L'invention s'applique ainsi plus particulièrement à un procédé d'attribution automatique d'adresses topologiques individuelles du type précité dans lequel de premières adresses topologiques individuelles exprimées dans un système d'adressage non hiérarchisé sont obtenues pour tous les commutateurs réseau, chaque adresse topologique individuelle comportant N identifiants, N ≥ 2, dont :
- un identifiant d'un niveau hiérarchique du commutateur réseau auquel elle est associée dans le réseau, et
- N-1 identifiant(s) non hiérarchisé(s) du commutateur réseau auquel elle est associée dans le réseau,
Le document d'art antérieur WO 2016/070 813, décrit des réseaux PCIe configuré pour recevoir un premier paquet de données à partir d'un premier commutateur, le premier paquet de données comprend une première partie de charge utile et une première adresse de destination qui se trouve dans la première plage d'adresses assignées au pont non transparent; traduire la première adresse de destination vers une première adresse de destination traduite, dans laquelle la première adresse de destination traduite appartient à un périphérique de point final dans la deuxième branche d'arbre et connecté au deuxième commutateur; générer un premier paquet de données modifié y compris la première partie de charge utile et la première adresse de destination traduite; et transmettre le premier paquet de données modifié au deuxième commutateur pour la livraison à l'appareil de point final dans la deuxième branche d'arbre.

L'article de Zahavi, intitulé « D-Mod-K routing providing non-blocking traffic for shift permutations on real life fat trees », publié en ligne en tant que CCIT Report #776, daté de Septembre 2010, propose une attribution d'adresse en N-uplet pour chaque commutateur d'un réseau PGFT. Dans ce type de réseau très structuré selon une arborescence clairement hiérarchisée en plusieurs niveaux de commutateurs, la première composante du N-uplet identifie le niveau hiérarchique du commutateur considéré et les N-1 autres composantes du N-uplet identifient le commutateur dans son niveau de façon non hiérarchique selon une règle qui permet de retrouver l'arborescence des commutateurs, depuis une racine de cette arborescence vers les feuilles qui sont formées par les commutateurs dont au moins un port est connecté à au moins un nœud de calcul ou service. Mais l'adresse elle-même ne reflète pas directement la structure hiérarchisée du réseau et l'ensemble des adresses ne peut pas être organisé selon cette hiérarchie de façon simple. Tout au plus les adresses en N-uplets peuvent-elles être classées par niveaux hiérarchiques.

Cela pose ensuite un problème d'enregistrement, de gestion et de manipulation des adresses et autres informations de commutateurs dans la gestion courante du réseau. Ces informations sont nécessaires à l'administration du réseau et c'est même l'une des fonctions courantes d'un serveur d'administration et d'une base de données d'administration, incluse dans une baie informatique de stockage de données, qui forment deux nœuds de service généralement présents dans les réseaux à grappes de serveurs pour calculateurs HPC.

Il peut ainsi être souhaité de prévoir un procédé d'attribution automatique d'adresses topologiques individuelles à des commutateurs réseau qui permette de s'affranchir d'au moins une partie des problèmes et contraintes précités.

Il est donc proposé un procédé d'attribution automatique d'adresses topologiques individuelles à des commutateurs réseau d'un réseau comportant des segments de transmission, lesdits commutateurs réseau interconnectés par ces segments de transmission et des nœuds de calcul ou service connectés à des ports d'au moins une partie des commutateurs réseau, le procédé comportant l'obtention de premières adresses topologiques individuelles exprimées dans un système d'adressage non hiérarchisé pour tous les commutateurs réseau, chaque adresse topologique individuelle comportant N identifiants, N ≥ 2, dont :
- un identifiant d'un niveau hiérarchique du commutateur réseau auquel elle est associée dans le réseau, et
- N-1 identifiant(s) non hiérarchisé(s) du commutateur réseau auquel elle est associée dans le réseau,
le procédé d'attribution d'adresses comportant en outre le transcodage de chaque première adresse topologique individuelle en une deuxième adresse topologique individuelle hiérarchisée selon les étapes de transcodage suivantes :
- subdivision du ou des N-1 identifiant(s) non hiérarchisé(s) de commutateur en fonction d'une valeur de l'identifiant de niveau hiérarchique :
   - en i identifiant(s) de sous-topologie, 0 ≤ i ≤ N-1, séparés entre eux lorsqu'ils sont au moins deux par au moins un premier caractère séparateur de niveaux hiérarchiques, formant ainsi une première chaîne de caractères, et
   - en j identifiant(s) de commutateur, j = N-1-i, séparés entre eux lorsqu'ils sont au moins deux par au moins un deuxième caractère séparateur d'identifiants différent du premier caractère séparateur, formant ainsi une deuxième chaîne de caractères,
- constitution de la deuxième adresse topologique individuelle hiérarchisée par une concaténation de caractères incluant au moins la première chaîne de caractères, la deuxième chaîne de caractères, ainsi qu'un troisième caractère séparateur entre les première et deuxième chaînes de caractères.

Ainsi, en transcodant les premières adresses topologiques individuelles de la façon indiquée ci-dessus, on fait apparaître, dans chaque deuxième adresse topologique et de façon explicite notamment grâce aux premier et deuxième caractères séparateurs différents, la disposition du commutateur considéré dans une structure hiérarchisée reconstituée des adresses topologiques et du réseau lui-même. Cela permet d'enregistrer ces adresses de façon naturelle dans le réseau, pour une gestion et une manipulation simplifiées des adresses de commutateurs et des informations auxquelles elles sont associées, notamment les informations relatives aux commutateurs. Pour les équipements, nœuds de calcul ou de service directement connectés aux commutateurs, il suffit de les identifier ou localiser en fonction du port de commutateur auquel ils sont chacun connectés pour leur appliquer également ce système d'adressage astucieusement transcodé. Les informations qui les concernent peuvent alors elles aussi être enregistrées et manipulées de façon simplifiée à l'aide de cette structure d'adresses topologiques hiérarchisées reconstituée.

De façon optionnelle :
- les premières adresses topologiques individuelles sont exprimées dans un système d'adressage en N-uplet,
- l'identifiant de niveau hiérarchique de chaque première adresse topologique individuelle forme une première composante du N-uplet et prend une valeur en relation affine avec j, et
- le ou les N-1 identifiant(s) non hiérarchisé(s) de commutateur de chaque adresse topologique individuelle forme(nt) le ou les N-1 autre(s) composante(s) du N-uplet.

De façon optionnelle également, la valeur que prend l'identifiant de niveau hiérarchique de chaque première adresse topologique individuelle :
- est comprise entre 0 et N-1, la valeur 0 étant réservée aux commutateurs réseau ayant au moins un port auquel est connecté au moins un nœud de calcul ou service, et
- est égale à j.

De façon optionnelle également, l'obtention des premières adresses topologiques individuelles des commutateurs réseau comporte la détermination automatique de l'identifiant de niveau hiérarchique de chaque commutateur réseau par attribution à cet identifiant d'une valeur égale au minimum entre N-1 et le nombre minimal d'autres commutateurs réseau qui doivent être traversés pour atteindre l'un quelconque des nœuds de calcul ou service à partir du commutateur réseau considéré. En d'autres termes, l'identifiant de niveau hiérarchique est de valeur égale au nombre minimal d'autres commutateurs réseau qui doivent être traversés pour atteindre l'un quelconque des nœuds de calcul ou service à partir du commutateur réseau considéré, sachant que cette valeur doit par ailleurs rester comprise entre 0 et N-1.

De façon optionnelle également, un procédé d'attribution automatique d'adresses topologiques individuelles selon l'invention peut en outre comporter l'enregistrement des deuxièmes adresses topologiques individuelles hiérarchisées dans un dispositif de stockage sous l'un des formats suivants :
- dans un système de répertoires et fichiers informatiques automatiquement constitué à l'aide des deuxièmes adresses topologiques individuelles hiérarchisées, elles-mêmes automatiquement enregistrées dans ce système de répertoires et fichiers à partir de la succession de premier(s) séparateur(s) et de chaque identifiant de sous-topologie qu'elles contiennent, ou
- dans un système de base de données, les deuxièmes adresses topologiques individuelles hiérarchisées étant accessibles dans ce système de base de données à l'aide de clés d'accès définies à partir de la succession de premier(s) séparateur(s) et de chaque identifiant de sous-topologie que les deuxièmes adresses topologiques individuelles hiérarchisées contiennent, ou
- dans un système de table de hachage indexée par des clés définies à partir de la succession de premier(s) séparateur(s) et de chaque identifiant de sous-topologie que les deuxièmes adresses topologiques individuelles hiérarchisées contiennent.

De façon optionnelle également, un autre premier caractère séparateur est ajouté en tête de chaque deuxième adresse topologique individuelle hiérarchisée pour identifier la racine d'une structure arborescente définie par l'ensemble des deuxièmes adresses topologiques individuelles hiérarchisées.

De façon optionnelle également, le premier caractère séparateur est un trait oblique « / », le deuxième caractère séparateur est un point « . », le troisième caractère séparateur est identique au premier caractère séparateur et chaque identifiant, de sous-topologie ou de commutateur, de chaque deuxième adresse topologique individuelle hiérarchisée est un nombre entier.

Il est également proposé un programme d'ordinateur téléchargeable depuis un réseau de communication et/ou enregistré sur un support lisible par ordinateur et/ou exécutable par un processeur, comprenant des instructions pour l'exécution des étapes d'un procédé d'attribution automatique d'adresses topologiques individuelles selon l'invention, lorsque ledit programme est exécuté sur un ordinateur.

Il est également proposé un serveur d'attribution automatique d'adresses topologiques individuelles à des commutateurs réseau d'un réseau comportant des segments de transmission, lesdits commutateurs réseau interconnectés par ces segments de transmission et des nœuds de calcul ou service connectés à des ports d'au moins une partie des commutateurs réseau, le serveur d'attribution comportant des moyens d'obtention de premières adresses topologiques individuelles exprimées dans un système d'adressage non hiérarchisé pour tous les commutateurs réseau, chaque adresse topologique individuelle comportant N identifiants, N ≥ 2, dont :
- un identifiant d'un niveau hiérarchique du commutateur réseau auquel elle est associée dans le réseau, et
- N-1 identifiant(s) non hiérarchisé(s) du commutateur réseau auquel elle est associée dans le réseau,
le serveur d'attribution comportant en outre un transcodeur de chaque première adresse topologique individuelle en une deuxième adresse topologique individuelle hiérarchisée selon les règles prédéfinies de transcodage suivantes :
- subdivision du ou des N-1 identifiant(s) non hiérarchisé(s) de commutateur en fonction d'une valeur de l'identifiant de niveau hiérarchique :
   - en i identifiant(s) de sous-topologie, 0 ≤ i ≤ N-1, séparés entre eux lorsqu'ils sont au moins deux par au moins un premier caractère séparateur de niveaux hiérarchiques, formant ainsi une première chaîne de caractères, et
   - en j identifiant(s) de commutateur, j = N-1-i, séparés entre eux lorsqu'ils sont au moins deux par au moins un deuxième caractère séparateur d'identifiants différent du premier caractère séparateur, formant ainsi une deuxième chaîne de caractères,
- constitution de la deuxième adresse topologique individuelle hiérarchisée par une concaténation de caractères incluant au moins la première chaîne de caractères, la deuxième chaîne de caractères, ainsi qu'un troisième caractère séparateur entre les première et deuxième chaînes de caractères.

Il est également proposé une grappe de serveurs comportant des segments de transmission, des commutateurs réseau interconnectés par ces segments de transmission et des nœuds de calcul et de service connectés à des ports d'au moins une partie des commutateurs réseau, dans laquelle au moins un nœud de service est un serveur d'attribution automatique d'adresses topologiques individuelles selon l'invention.

L'invention sera mieux comprise à l'aide de la description qui va suivre, donnée uniquement à titre d'exemple et faite en se référant aux dessins annexés dans lesquels :
- la figure 1 représente schématiquement la structure générale d'un réseau, notamment une grappe de serveurs, incluant un serveur d'attribution automatique d'adresses topologiques individuelles aux commutateurs qu'il comporte, selon un mode de réalisation de l'invention,
- la figure 2 illustre les étapes successives d'un procédé d'attribution automatique d'adresses topologiques individuelles à des commutateurs réseau, selon un mode de réalisation de l'invention, et
- les figures 3 et 4 illustrent deux exemples très différents de topologies de réseaux sur lesquelles le procédé de la figure 2 peut être appliqué.

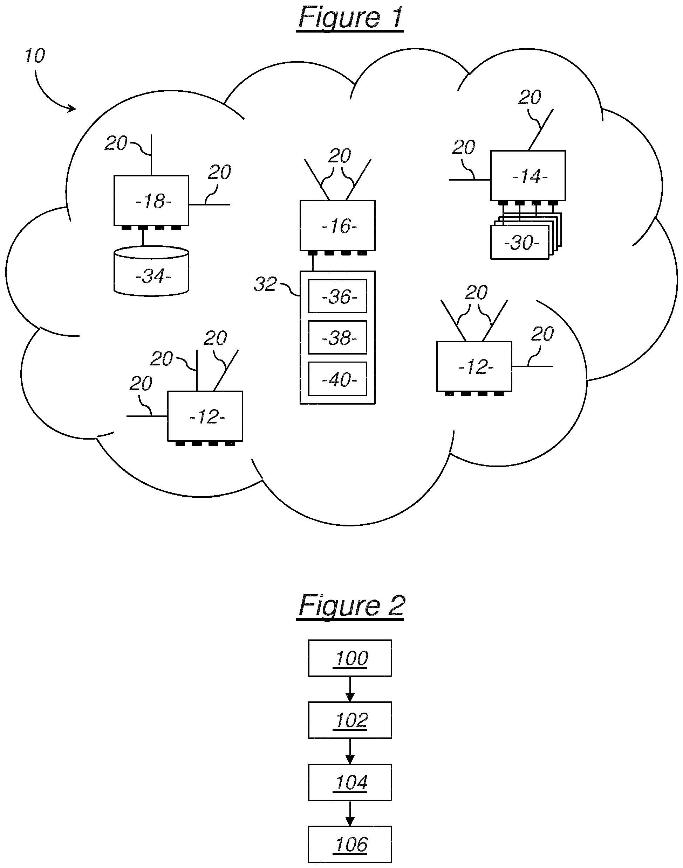

Le réseau 10 représenté schématiquement sur la figure 1 comporte des commutateurs réseau référencés 12, 14, 16 ou 18, des segments de transmission référencés 20 pour interconnecter les commutateurs réseau selon une topologie structurée ou pas, et des nœuds de calcul ou service 30, 32, 34 connectés à des ports d'au moins une partie des commutateurs réseau. Les segments de transmission 20 sont concrètement des câbles ou nappes, électriques ou optiques, de transmissions de données numériques. Dans l'exemple non limitatif illustré sur cette figure, la topologie du réseau 10 est indirecte. En d'autres termes, une partie des commutateurs n'est directement connectée à aucun nœud de calcul ou service : il s'agit des commutateurs portant la référence 12. Ils ne servent qu'à recevoir des données en provenance ou transmettre des données vers d'autres commutateurs du réseau 10.

D'autres commutateurs sont directement connectés, par au moins l'un de leurs ports, à des nœuds de calcul ou service quelconques 30 : il s'agit des commutateurs portant la référence 14, dont un seul est illustré sur la figure 1.

Conformément à un mode de réalisation de la présente invention, le réseau 10 comporte un nœud de service particulier, appelé serveur d'attribution et référencé 32, dont la fonction est d'attribuer automatiquement des adresses topologiques individuelles aux commutateurs réseau du réseau 10. Ce serveur d'attribution 32 est connecté à l'un des ports d'un commutateur particulier du réseau 10 identifié par la référence 16. En variante, le serveur d'attribution 32 pourrait être extérieur au réseau 10 pour ne pas surcharger ce dernier, mais avec un accès au réseau 10. En particulier il pourrait faire partie d'un réseau secondaire ayant un accès au réseau 10.

De façon optionnelle, le réseau 10 comporte un autre nœud de service particulier, appelé base de données d'administration et référencé 34, dont la fonction est de stocker les adresses topologiques attribuées par le serveur 32 avec des informations éventuelles sur les commutateurs réseau et équipements correspondants. Cette base de données d'administration 34 est par exemple connectée à l'un des ports d'un commutateur particulier du réseau 10 identifié par la référence 18. Elle peut être matérialisée par un disque de stockage, ou une zone de stockage, dans une baie de stockage informatique ou par tout autre support pour le stockage de données. Elle est illustrée sur la figure 1 comme éloignée du serveur d'attribution 32 mais pourrait en variante être connectée au même commutateur 16, voire même être intégrée au serveur d'attribution 32. En variante, elle peut n'être connectée à aucun commutateur réseau mais à un nœud du réseau 10, par exemple en étant intégrée dans une mémoire RAM (de l'anglais « Random Access Memory ») de l'un de ces nœuds. En variante également, elle pourrait aussi être extérieure au réseau 10.

Le réseau 10 comporte d'autres nœuds de calcul ou service, notamment les nœuds 30, permettant en particulier de constituer une grappe de serveurs pour réaliser les fonctions d'un calculateur HPC. On notera que les nœuds de service incluent notamment des moyens de stockage du calculateur HPC. Ce type d'installation étant par ailleurs bien connu et susceptible de se conjuguer en de multiples architectures, il ne sera pas davantage détaillé.

Le serveur d'attribution 32 peut par exemple être mis en œuvre dans un dispositif informatique tel qu'un ordinateur classique comportant un processeur associé à une ou plusieurs mémoires pour le stockage de fichiers de données et de programmes d'ordinateurs. Tel qu'illustré sur la figure 1, il comporte ainsi fonctionnellement trois programmes d'ordinateurs ou trois fonctions d'un même programme d'ordinateur 36, 38, 40. On notera en effet que les programmes d'ordinateurs 36, 38, 40 sont présentés comme distincts, mais cette distinction est purement fonctionnelle. Ils pourraient tout aussi bien être regroupés selon toutes les combinaisons possibles en un ou plusieurs logiciels. Leurs fonctions pourraient aussi être au moins en partie micro programmées ou micro câblées dans des circuits intégrés dédiés. Ainsi, en variante, le dispositif informatique mettant en œuvre le serveur d'attribution 32 pourrait être remplacé par un dispositif électronique composé uniquement de circuits numériques (sans programme d'ordinateur) pour la réalisation des mêmes actions.

Le premier programme d'ordinateur 36 comporte des instructions pour obtenir, pour chaque commutateur réseau du réseau 10, une première adresse topologique individuelle exprimée dans un système d'adressage non hiérarchisé, chaque adresse topologique individuelle comportant N identifiants, N ≥ 2, dont :
- un identifiant d'un niveau hiérarchique du commutateur réseau auquel elle est associée dans le réseau 10, et
- N-1 identifiant(s) non hiérarchisé(s) du commutateur réseau auquel elle est associée dans le réseau 10.

Par exemple, comme cela est connu de l'état de la technique, notamment de l'article de Zahavi précité, chaque première adresse topologique individuelle de commutateur réseau peut être exprimée dans un système d'adressage en N-uplet. L'identifiant de niveau hiérarchique de chaque première adresse topologique individuelle forme alors une première composante du N-uplet et le ou les N-1 identifiant(s) non hiérarchisé(s) de commutateur de chaque adresse topologique individuelle forme(nt) le ou les N-1 autre(s) composante(s) du N-uplet. Le principe d'encodage de chaque N-uplet peut être relatif, ou pas, à la position dans le réseau 10 du commutateur réseau qu'il identifie.

Selon une première variante de réalisation de l'invention, les premières adresses topologiques individuelles des commutateurs réseau 12, 14, 16, 18 peuvent être enregistrées et accessibles dans la base de données d'administration 34. Dans ce cas, le premier programme d'ordinateur 36 se contente de récupérer ces premières adresses.

Selon une deuxième variante de réalisation de l'invention, les premières adresses topologiques individuelles des commutateurs réseau ne sont pas entièrement connues et enregistrées, seul(s) le ou les N-1 identifiant(s) non hiérarchisé(s) de chaque commutateur étant enregistré(s) et accessible(s) dans la base de données d'administration 34. Dans ce cas, le premier programme d'ordinateur 36 ne se contente pas de récupérer ces premières adresses. Il est en outre conçu pour, lorsqu'il est exécuté sur le serveur d'attribution 32, déterminer automatiquement un identifiant de niveau hiérarchique pour chaque commutateur réseau par attribution à cet identifiant d'une valeur égale au minimum entre N-1 et le nombre minimal d'autres commutateurs réseau qui doivent être traversés pour atteindre l'un quelconque des nœuds de calcul ou service 30, 32, 34 à partir du commutateur réseau considéré. On constitue ainsi une première hiérarchisation des commutateurs réseau du réseau 10 en fonction de leurs «distances» respectives aux nœuds de calcul ou service.

Le deuxième programme d'ordinateur 38, ou transcodeur, comporte des instructions pour transcoder chaque première adresse topologique individuelle en une deuxième adresse topologique individuelle hiérarchisée selon les règles prédéfinies de transcodage suivantes :
- subdivision du ou des N-1 identifiant(s) non hiérarchisé(s) de commutateur en fonction d'une valeur de l'identifiant de niveau hiérarchique :
   - en i identifiant(s) de sous-topologie, 0 ≤ i ≤ N-1, séparés entre eux lorsqu'ils sont au moins deux par au moins un premier caractère séparateur de niveaux hiérarchiques, formant ainsi une première chaîne de caractères, et
   - en j identifiant(s) de commutateur, j = N-1-i, séparés entre eux lorsqu'ils sont au moins deux par au moins un deuxième caractère séparateur d'identifiants différent du premier caractère séparateur, formant ainsi une deuxième chaîne de caractères,
- constitution de la deuxième adresse topologique individuelle hiérarchisée par une concaténation de caractères incluant au moins la première chaîne de caractères, la deuxième chaîne de caractères, ainsi qu'un troisième caractère séparateur entre les première et deuxième chaînes de caractères.

Ainsi, les deuxièmes adresses topologiques individuelles hiérarchisées reconstituent une structure d'adresses hiérarchisée en arbre grâce aux sous-topologies identifiées, d'une racine jusqu'aux feuilles de cet arbre. Le transcodage ainsi réalisé introduit explicitement une notion de dimension dans les adresses topologiques elles-mêmes.

De préférence, pour chaque commutateur réseau, la valeur de l'identifiant de niveau hiérarchique est en relation affine avec le nombre j d'identifiant(s) de commutateur. A titre d'exemple non limitatif, l'identifiant de niveau hiérarchique de chaque première adresse topologique individuelle est de valeur comprise 0 et N-1, la valeur 0 étant réservée aux commutateurs réseau 14, 16, 18 ayant au moins un port auquel est connecté au moins un nœud de calcul ou service. Ces commutateurs réseau 14, 16, 18 sont qualifiés de commutateurs « feuilles », en référence aux feuilles terminales d'une structure arborescente.

A titre d'exemple non limitatif également, le nombre j déterminant la subdivision du ou des N-1 identifiant(s) non hiérarchisé(s) de chaque première adresse topologique individuelle est égal à l'identifiant de niveau hiérarchique. Ce choix est pertinent parce que chaque commutateur feuille, de niveau 0, est alors grâce à la présente invention complètement déterminé par ses i = N-1 identifiant(s) de sous-topologie : il n'a donc pas besoin d'identifiant de commutateur propre puisqu'il est seul dans sa sous-topologie de plus bas niveau en fin de récurrence. Au contraire, plus un commutateur réseau a un niveau hiérarchique élevé, moins il a besoin d'identifiant(s) de sous-topologie pour déterminer sa position dans l'arbre reconstitué à l'aide des deuxièmes adresses topologiques individuelles hiérarchisées et plus il peut disposer d'identifiant(s) de commutateur pour se distinguer d'autres commutateurs situés dans la même sous-topologie. C'est une caractéristique avantageuse puisque le fait qu'un commutateur réseau soit situé plus haut dans la topologie reconstituée implique qu'il ait probablement besoin de davantage d'identifiants de commutateur pour se distinguer des autres. Lorsqu'il est situé au plus haut niveau, c'est-à-dire à la racine de l'arbre, un commutateur réseau n'a pas besoin d'identifiant de sous-topologie.

En pratique, selon un choix arbitraire mais conforme à une représentation communément admise dans les structures arborescentes des systèmes de répertoires et fichiers, le premier caractère séparateur peut être un trait oblique « / ». Pour s'en distinguer, le deuxième caractère séparateur peut alors être un point « . ». Le troisième caractère séparateur peut être différent des deux premiers, mais ce n'est pas une obligation. Il peut aussi être identique au premier ou au deuxième caractère séparateur. Selon les pratiques courantes de notations de répertoires et de fichiers, le troisième caractère séparateur sera généralement choisi identique au premier. En ce qui concerne les identifiants, de sous-topologie ou de commutateur, il peut s'agir tout simplement de nombres entiers, représentés en code binaire ou selon toute base choisie en fonction du réseau 10 considéré et des contraintes applicatives. Il est possible également de placer un premier caractère séparateur, c'est-à-dire un trait oblique « / », en tête de chaque deuxième adresse topologique individuelle hiérarchisée pour identifier clairement la racine de l'arbre reconstitué par l'ensemble des deuxièmes adresses topologiques individuelles hiérarchisées.

A titre d'illustration, en considérant quatre commutateurs différents situés à quatre niveaux différents d'un même réseau, de premières adresses en quadruplets comportant trois mêmes identifiants non hiérarchisés A, B et C, on peut écrire les quatre premières adresses topologiques individuelles de la façon suivante : (3, A, B, C), (2, A, B, C), (1, A, B, C) et (0, A, B, C). En exécutant les instructions du transcodeur 38, et en ajoutant pour plus de clarté l'extension « _switch » à chaque adresse de commutateur réseau, on obtient respectivement les quatre deuxièmes adresses topologiques individuelles hiérarchisées suivantes : /A.B.C_switch pour le commutateur de niveau 3 situé à la racine de la structure arborescente reconstituée (il y a donc i=0 identifiant de sous-topologie et j=3 identifiants de commutateur dans cette deuxième adresse topologique), /A/B.C_switch pour le commutateur de niveau 2 (il y a donc i=1 identifiant de sous-topologie et j=2 identifiants de commutateur dans cette deuxième adresse topologique), /A/B/C_switch pour le commutateur de niveau 1 (il y a donc i=2 identifiants de sous-topologie et j=1 identifiant de commutateur dans cette deuxième adresse topologique) et /A/B/C/_switch pour le commutateur feuille de niveau 0 (il y a donc i=3 identifiants de sous-topologie et j=0 identifiant de commutateur dans cette deuxième adresse topologique). On voit clairement que ce principe astucieux de transcodage permet d'appréhender directement dans les deuxièmes adresses topologiques individuelles hiérarchisées la structure arborescente reconstituée, ce qui s'adapte ensuite judicieusement à un enregistrement structuré de ces adresses et des informations qui leur sont associées (relatives aux commutateurs et aux équipements éventuellement connectés aux ports de ces commutateurs). On voit également clairement que le transcodage permet cette reconstitution arborescente dans les deuxièmes adresses topologiques, quelle que soit la structure et le nombre de niveaux hiérarchiques du réseau 10, même s'il ne s'agit pas d'un réseau topologiquement arborescent de type XGFT ou PGFT.

Le troisième programme d'ordinateur 40 comporte des instructions pour enregistrer les deuxièmes adresses topologiques individuelles hiérarchisées fournies par le serveur d'attribution 32 dans la base de données d'administration 34.

Ces deuxièmes adresses topologiques individuelles hiérarchisées peuvent être stockées, avec les autres informations éventuelles qui peuvent leur être associées (relatives aux commutateurs et aux équipements connectés aux commutateurs), dans un système de répertoires et fichiers informatiques qui peut être automatiquement constitué à l'aide des deuxièmes adresses topologiques individuelles hiérarchisées. Elles-mêmes peuvent être automatiquement enregistrées dans ce système de répertoires et fichiers à partir de la succession de premier(s) séparateur(s) et de chaque identifiant de sous-topologie qu'elles contiennent. A titre d'illustration, les informations relatives au commutateur de deuxième adresse topologique /A.B.C_switch précédemment mentionné peuvent être stockées dans un fichier ou répertoire « A.B.C_switch » situé à la racine « / » du système de répertoires et fichiers. De même, les informations relatives au commutateur de deuxième adresse topologique /A/B.C_switch précédemment mentionné peuvent être stockées dans un fichier ou répertoire « B.C_switch » situé dans le répertoire « /A/ » du système de répertoires et fichiers. De même, les informations relatives au commutateur de deuxième adresse topologique /A/B/C_switch précédemment mentionné peuvent être stockées dans un fichier ou répertoire « C_switch » situé dans le répertoire « /A/B/ » du système de répertoires et fichiers. Enfin, les informations relatives au commutateur de deuxième adresse topologique /A/B/C/_switch précédemment mentionné peuvent être stockées dans un fichier ou répertoire «_switch » situé dans le répertoire « /A/B/C/ » du système de répertoires et fichiers.

Les informations relatives à chaque commutateur réseau peuvent comporter des préfixes d'horodatage des éventuels équipements qui lui sont connectés ou du commutateur réseau lui-même. Elles peuvent en outre comporter des attributs du commutateur, par exemple l'identification de ses ports et leur statut, ou de ses équipements. Elles peuvent en outre comporter la table de routage propre à chaque commutateur réseau. Cette liste n'est pas exhaustive.

En variante et de façon encore plus avantageuse, les deuxièmes adresses topologiques individuelles hiérarchisées peuvent être stockées, avec les autres informations éventuelles qui peuvent leur être associées, dans un système de base de données à clés d'accès. Les deuxièmes adresses topologiques individuelles hiérarchisées et leurs informations associées sont alors accessibles dans ce système de base de données à l'aide de clés d'accès qui peuvent être définies directement à partir de la succession de premier(s) séparateur(s) et de chaque identifiant de sous-topologie qu'elles contiennent. Cette variante est avantageuse parce les informations stockées dans le système de base de données sont directement indexées par les deuxièmes adresses topologiques. Plusieurs serveurs d'administration peuvent gérer le réseau 10, chacun pouvant alors être associé à une sous-topologie à laquelle il accède très simplement à l'aide de l'indexation adéquate.

Selon une autre variante avantageuse, les deuxièmes adresses topologiques individuelles hiérarchisées peuvent être stockées, avec les autres informations éventuelles qui peuvent leur être associées, dans un système de table de hachage indexée par des clés définies à partir de la succession de premier(s) séparateur(s) et de chaque identifiant de sous-topologie que les deuxièmes adresses topologiques individuelles hiérarchisées contiennent.

Le procédé d'attribution automatique d'adresses topologiques individuelles à des commutateurs tel qu'illustré sur la figure 2 est mis en œuvre par le serveur d'attribution 32.

Au cours d'une première étape 100, les premières adresses topologiques individuelles des commutateurs 12, 14, 16, 18 du réseau 10 sont obtenues par exécution du premier programme d'ordinateur 36.

Au cours d'une deuxième étape 102, le ou les N-1 identifiant(s) non hiérarchisé(s) de commutateur de chaque première adresse topologique individuelle est ou sont subdivisé(s) en identifiant(s) de sous-topologie et identifiant(s) de commutateur par exécution du deuxième programme d'ordinateur 38.

Au cours d'une troisième étape 104, chaque deuxième adresse topologique individuelle hiérarchisée est constituée par concaténation de caractères, cette concaténation étant automatiquement réalisée par exécution du deuxième programme d'ordinateur 38.

Enfin, au cours d'une quatrième étape 106, les deuxièmes adresses topologiques individuelles hiérarchisées sont enregistrées dans la base de données d'administration 34, avec leurs informations éventuelles associées, par exécution du troisième programme d'ordinateur 40.

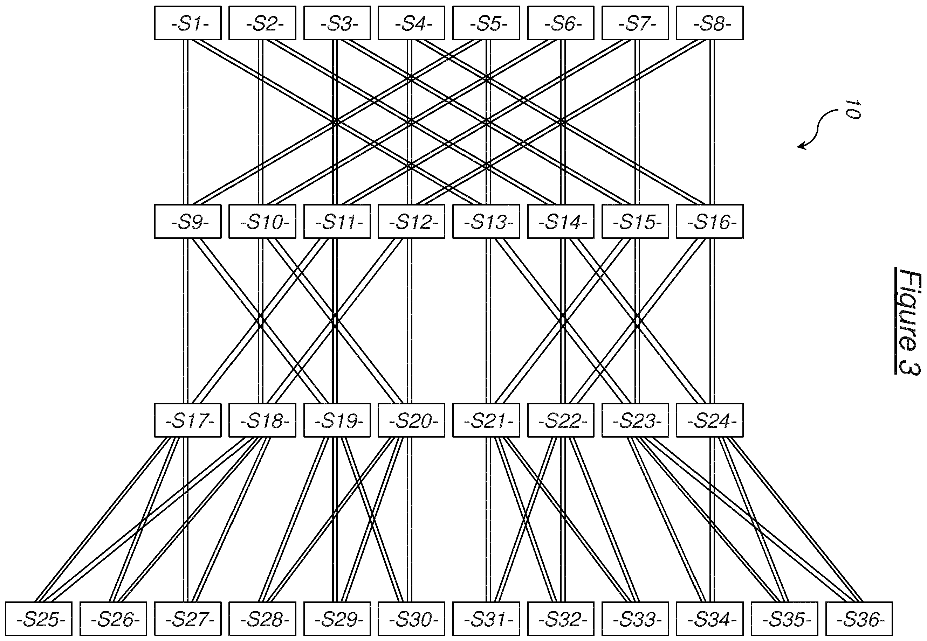

Un exemple de résultat obtenu sur un réseau très structuré de type PGFT va maintenant être présenté en référence à la figure 3. Sur cette figure, conformément à la notation canonique présentée dans l'article de Zahavi et al précédemment cité, le réseau 10 est un réseau PGFT (3 ; 3, 2, 2 ; 2, 2, 2 ; 2, 2, 2). Au plus haut niveau hiérarchique, il comporte huit commutateurs notés S1 à S8. Au niveau inférieur, il comporte huit autres commutateurs notés S9 à S16. Au niveau encore inférieur, il comporte huit autres commutateurs notés S17 à S24. Enfin, au plus bas niveau hiérarchique, il comporte douze commutateurs feuilles notés S25 à S36.

Conformément à cette même notation canonique, voici ce que deviennent les trente-six premières adresses topologiques individuelles des trente-six commutateurs S1 à S36 par transcodage selon les principes du mode de réalisation de la présente invention détaillé précédemment.

La première adresse topologique (03, 00, 00, 00) du commutateur S1 est transcodée en la deuxième adresse topologique hiérarchisée /00.00.00_switch.

La première adresse topologique (03, 00, 00, 01) du commutateur S2 est transcodée en la deuxième adresse topologique hiérarchisée /00.00.01_switch.

La première adresse topologique (03, 00, 01, 00) du commutateur S3 est transcodée en la deuxième adresse topologique hiérarchisée /00.01.00_switch.

La première adresse topologique (03, 00, 01, 01) du commutateur S4 est transcodée en la deuxième adresse topologique hiérarchisée /00.01.01_switch.

La première adresse topologique (03, 01, 00, 00) du commutateur S5 est transcodée en la deuxième adresse topologique hiérarchisée /01.00.00_switch.

La première adresse topologique (03, 01, 00, 01) du commutateur S6 est transcodée en la deuxième adresse topologique hiérarchisée /01.00.01_switch.

La première adresse topologique (03, 01, 01, 00) du commutateur S7 est transcodée en la deuxième adresse topologique hiérarchisée /01.01.00_switch.

La première adresse topologique (03, 01, 01, 01) du commutateur S8 est transcodée en la deuxième adresse topologique hiérarchisée /01.01.01_switch.

La première adresse topologique (02, 00, 00, 00) du commutateur S9 est transcodée en la deuxième adresse topologique hiérarchisée /00/00.00_switch.

La première adresse topologique (02, 00, 00, 01) du commutateur S10 est transcodée en la deuxième adresse topologique hiérarchisée /00/00.01_switch.

La première adresse topologique (02, 00, 01, 00) du commutateur S11 est transcodée en la deuxième adresse topologique hiérarchisée /00/01.00_switch.

La première adresse topologique (02, 00, 01, 01) du commutateur S12 est transcodée en la deuxième adresse topologique hiérarchisée /00/01.01_switch.

La première adresse topologique (02, 01, 00, 00) du commutateur S13 est transcodée en la deuxième adresse topologique hiérarchisée /01/00.00_switch.

La première adresse topologique (02, 01, 00, 01) du commutateur S14 est transcodée en la deuxième adresse topologique hiérarchisée /01/00.01_switch.

La première adresse topologique (02, 01, 01, 00) du commutateur S15 est transcodée en la deuxième adresse topologique hiérarchisée /01/01.00_switch.

La première adresse topologique (02, 01, 01, 01) du commutateur S16 est transcodée en la deuxième adresse topologique hiérarchisée /01/01.01_switch.

La première adresse topologique (01, 00, 00, 00) du commutateur S17 est transcodée en la deuxième adresse topologique hiérarchisée /00/00/00_switch.

La première adresse topologique (01, 00, 00, 01) du commutateur S18 est transcodée en la deuxième adresse topologique hiérarchisée /00/00/01_switch.

La première adresse topologique (01, 00, 01, 00) du commutateur S19 est transcodée en la deuxième adresse topologique hiérarchisée /00/01/00_switch.

La première adresse topologique (01, 00, 01, 01) du commutateur S20 est transcodée en la deuxième adresse topologique hiérarchisée /00/01/01_switch.

La première adresse topologique (01, 01, 00, 00) du commutateur S21 est transcodée en la deuxième adresse topologique hiérarchisée /01/00/00_switch.

La première adresse topologique (01, 01, 00, 01) du commutateur S22 est transcodée en la deuxième adresse topologique hiérarchisée /01/00/01_switch.

La première adresse topologique (01, 01, 01, 00) du commutateur S23 est transcodée en la deuxième adresse topologique hiérarchisée /01/01/00_switch.

La première adresse topologique (01, 01, 01, 01) du commutateur S24 est transcodée en la deuxième adresse topologique hiérarchisée /01 /01 /01_switch.

La première adresse topologique (00, 00, 00, 00) du commutateur S25 est transcodée en la deuxième adresse topologique hiérarchisée /00/00/00/_switch.

La première adresse topologique (00, 00, 00, 01) du commutateur S26 est transcodée en la deuxième adresse topologique hiérarchisée /00/00/01/_switch.

La première adresse topologique (00, 00, 00, 02) du commutateur S27 est transcodée en la deuxième adresse topologique hiérarchisée /00/00/02/_switch.

La première adresse topologique (00, 00, 01, 00) du commutateur S28 est transcodée en la deuxième adresse topologique hiérarchisée /00/01/00/_switch.

La première adresse topologique (00, 00, 01, 01) du commutateur S29 est transcodée en la deuxième adresse topologique hiérarchisée 100101/01/_switch.

La première adresse topologique (00, 00, 01, 02) du commutateur S30 est transcodée en la deuxième adresse topologique hiérarchisée /00/01/02/_switch.

La première adresse topologique (00, 01, 00, 00) du commutateur S31 est transcodée en la deuxième adresse topologique hiérarchisée /01/00/00/_switch.

La première adresse topologique (00, 01, 00, 01) du commutateur S32 est transcodée en la deuxième adresse topologique hiérarchisée /01/00/01/_switch.

La première adresse topologique (00, 01, 00, 02) du commutateur S33 est transcodée en la deuxième adresse topologique hiérarchisée /01/00/02/_switch.

La première adresse topologique (00, 01, 01, 00) du commutateur S34 est transcodée en la deuxième adresse topologique hiérarchisée /01/01/00/_switch.

La première adresse topologique (00, 01, 01, 01) du commutateur S35 est transcodée en la deuxième adresse topologique hiérarchisée /01/01/01/_switch.

La première adresse topologique (00, 01, 01, 02) du commutateur S36 est transcodée en la deuxième adresse topologique hiérarchisée /01/01/02/_switch.

Par ailleurs, les sous-topologies reconstituées elles-mêmes peuvent avantageusement être identifiées à l'aide de ce schéma de deuxièmes adresses topologiques individuelles hiérarchisées. Par exemple « / » identifie l'ensemble du réseau 10, c'est-à-dire la topologie « racine » qui contient les commutateurs réseau S1, S2, S3, S4, S5, S6, S7, S8 ainsi que les sous-topologies « /00/ » et « /01/ » ; « /00/ » identifie la sous-topologie contenant les commutateurs réseau S9, S10, S11, S12, ainsi que les sous-topologies « /00/00/ » et « /00/01/ » ; « /00/00/ » identifie la sous-topologie contenant les commutateurs réseau S17, S18, ainsi que les sous-topologies « /00/00/00/ » et « /00/00/01/ » ; « /00/00/00/ » identifie la sous-topologie contenant le commutateur réseau S25 ; etc. On note de cette façon que les sous-topologies sont organisées récursivement en arborescence à partir de la racine « / » jusqu'à atteindre les commutateurs feuilles.

Une représentation sous forme de liste récursive hiérarchisée des deuxièmes adresses topologiques des commutateurs et sous-topologies du réseau 10 de la figure 3 peut alors être naturellement proposée :

```
 /
 /00.00.00_switch (pour S1)
 /00.00.01_switch (pour S2)
 /00.01.00_switch (pour S3)
 /00.01.01_switch (pour S4)
 /01.00.00_switch (pour S5)
 /01.00.01_switch (pour S6)
 /01.01.00_switch (pour S7)
 101.01.01_switch (pour S8)
 /00/
 /00/00.00_switch (pour S9)
 /00/00.01_switch (pour S10)
 /00/01.00_switch (pour S11)
 /00/01.01_switch (pour S12)
 /00/00/
 /00/00/00_switch (pour S17)
 /00/00/01_switch (pour S18)
 /00/00/00/
 /00/00/00/_switch (pour S25)
 /00/00/01/
 /00/00/01/_switch (pour S26)
 /00/00/02/
 /00/00/02/_switch (pour S27)
 /00/01/
 /00/01/00_switch (pour S19)
 /00/01/01_switch (pour S20)
 /00/01/00/
 /00/01/00/_switch (pour S28)
 /00/01/01/
 100101/01/_switch (pour S29)
 /00/01/02/
 /00/01/02/_switch (pour S30)
 /01/
 /01/00.00_switch (pour S13)
 /01/00.01_switch (pour S14)
 /01/01.00_switch (pour S15)
 101/01.01_switch (pour S16)
 /01/00/
 /01/00/00_switch (pour S21)
 /01/00/01_switch (pour S22)
 /01/00/00/
 /01/00/00/_switch (pour S31)
 /01/00/01/
 /01/00/01/_switch (pour S32)
 /01/00/02/
 /01/00/02/_switch (pour S33)
 /01/01/
 /01/01/00_switch (pour S23)
 /01/01/01_switch (pour S24)
 /01/01/00/
 /01/01/00/_switch (pour S34)
 /01/01/01/
 /01/01/01/_switch (pour S35)
 /01/01/02/
 /01/01/02/_switch (pour S36)
```

Le transcodage proposé selon la présente invention est particulièrement profitable aux topologies déjà hiérarchiquement très structurées comme les topologies XGFT ou PGFT. Mais dans une moindre mesure, on comprend aisément qu'il est également profitable aux topologies indirectes peu ou pas structurées. Il est également profitable aux topologies directes dans lesquelles plusieurs niveaux de hiérarchie des commutateurs réseau peuvent être identifiés.

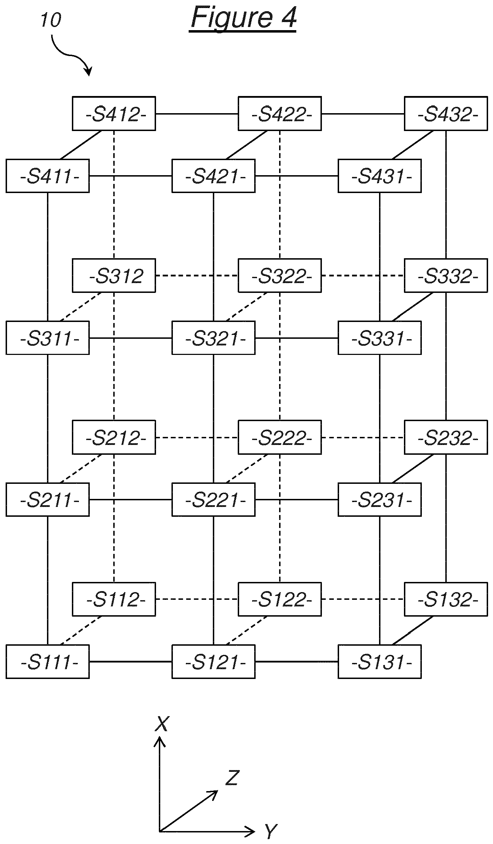

La pire des situations est celle d'un réseau de topologie directe et sans structure particulière dans laquelle tous les commutateurs sont par défaut au même niveau. Dans une moindre mesure, un exemple de situation particulièrement défavorable est illustré sur la figure 4 et il va maintenant être montré que même dans ce cas défavorable, le transcodage proposé reste avantageux.

Sur cette figure, le réseau 10 est de topologie directe avec tous les commutateurs au même niveau. Il est cependant malgré tout structuré en réseau maillé selon trois directions X, Y, Z et comporte selon ces trois directions 4x3x2 = 24 commutateurs réseau notés S111 à S432 en fonction de leurs coordonnées tridimensionnelles, tous donc de même niveau 0. A partir des coordonnées en (X, Y, Z), il est très facile d'obtenir une première adresse topologique individuelle en quadruplet (0, X, Y, Z) pour chaque commutateur réseau.

Par transcodage de chaque première adresse topologique individuelle (0, X, Y, Z) selon le principe énoncé précédemment, une représentation sous forme de liste récursive hiérarchisée des deuxièmes adresses topologiques des commutateurs et sous-topologies du réseau 10 de la figure 4 peut alors être naturellement proposée :

```
 /
 /00/
 /00/00/
 /00/00/00/
 /00/00/00/_switch (pour S111)
 /00/00/01/
 /00/00/01/_switch (pour S112)
 /00/01/
 /00/01/00/
 /00/01/00/_switch (pour S121)
 /00/01/01/
 /00/01/01/_switch (pour S122)
 /00/02/
 /00/02/00/
 /00/02/00/_switch (pour S131)
 /00/02/01/
 /00/02/01/_switch (pour S132)
 /01/
 /01/00/
 /01/00/00/
 /01/00/00/_switch (pour S211)
 /01/00/01/
 /01/00/01_/_switch (pour S212)
 /01/01/
 /01/01/00/
 /01/01/00/_switch (pour S221)
 /01/01/01/
 /01/01/01/_switch (pour S222)
 /01/02/
 /01/02/00/
 /01/02/00/_switch (pour S231)
 /01/02/01/
 /01/02/01/_switch (pour S232)
 /02/
 /02/00/
 /02/00/00/
 /02/00/00/_switch (pour S311)
 /02/00/01/
 /02/00/01/_switch (pour S312)
 /02/01/
 /02/01/00/
 /02/01/00/_switch (pour S321)
 /02/01/01/
 /02/01/01/_switch (pour S322)
 /02/02/
 /02/02/00/
 /02/02/00/_switch (pour S331)
 /02/02/01/
 /02/02/01/_switch (pour S332)
 /03/
 /03/00/
 /03/00/00/
 /03/00/00/_switch (pour S411)
 /03/00/01/
 /03/00/01/_switch (pour S412)
 /03/01/
 /03/01/00/
 /03/01/00/_switch (pour S421)
 /03/01/01/
 /03/01/01/_switch (pour S422)
 /03/02/
 /03/02/00/
 /03/02/00/_switch (pour S431)
 /03/02/01/
 /03/02/01/_switch (pour S432)
```

On notera par ailleurs que même en choisissant des premières adresses topologiques individuelles exprimées selon un autre format, par exemple (0, Z, Y, X), une représentation sous forme de liste récursive hiérarchisée des deuxièmes adresses topologiques des commutateurs et sous-topologies du réseau 10 de la figure 4 peut également être naturellement proposée :

```
/
 /00/
 /00/00/
 /00/00/00/
 /00/00/00/_switch (pour S111)
 /00/00/01/
 /00/00/01/_switch (pour S211)
 /00/00/02/
 /00/00/02/_switch (pour S311)
 /00/00/03/
 /00/00/03/_switch (pour S411)
 /00/01/
 /00/01/00/
 /00/01/00/_switch (pour S121)
 /00/01/01/
 /00/01/01/_switch (pour S221)
 /00/01/02/
 /00/01/02/_switch (pour S321)
 /00/01/03/
 /00/01/03/_switch (pour S421)
 /00/02/
 /00/02/00/
 /00/02/00/_switch (pour S131)
 /00/02/01/
 /00/02/01/_switch (pour S231)
 /00/02/02/
 /00/02/02/_switch (pour S331)
 /00/02/03/
 /00/02/03/_switch (pour S431)
 /01/
 /01/00/
 /01/00/00/
 /01/00/00/_switch (pour S112)
 /01/00/01/
 /01/00/01/_switch (pour S212)
 /01/00/02/
 /01/00/02/_switch (pour S312)
 /01/00/03/
 /01/00/03/_switch (pour S412)
 /01/01/
 /01/01/00/
 /01/01/00/_switch (pour S122)
 /01/01/01/
 /01/01/01/_switch (pour S222)
 /01/01/02/
 /01/01/02/_switch (pour S322)
 /01/01/03/
 /01/01/03/_switch (pour S422)
 /01/02/
 /01/02/00/
 /01/02/00/_switch (pour S132)
 /01/02/01/
 /01/02/01/_switch (pour S232)
 /01/02/02/
 /01/02/02/_switch (pour S332)
 /01/02/03/
 /01/02/03/_switch (pour S432)
```

Ainsi, même dans le cas défavorable de la figure 4, et indépendamment du choix de représentation en quadruplets des premières adresses topologiques individuelles, le transcodage automatique proposé en deuxièmes adresses topologiques individuelles hiérarchisées permet une identification structurée et hiérarchisée des commutateurs, permettant ensuite un enregistrement et une gestion structurées des informations qui leur sont associées.

Il apparaît clairement qu'un principe de transcodage tel que celui décrit précédemment, appliqué à l'attribution automatique d'adresses topologiques individuelles à des commutateurs réseau, permet de faire apparaître, dans chaque deuxième adresse topologique et de façon explicite notamment grâce aux premier et deuxième caractères séparateurs différents, la disposition de chaque commutateur réseau d'un réseau quelconque dans une structure hiérarchisée reconstituée des adresses topologiques et du réseau lui-même, pour une gestion et une manipulation simplifiées des adresses de commutateurs et des informations auxquelles elles sont associées.

Il apparaîtra en effet à l'homme de l'art que diverses modifications peuvent être apportées aux modes de réalisation et variantes décrits ci-dessus, dans la mesure où elles relèvent du champ d'application des revendications jointes.

## Revendications

1. Procédé d'attribution automatique d'adresses topologiques individuelles à des commutateurs réseau (12, 14, 16, 18) d'un réseau (10) comportant des segments de transmission (20), lesdits commutateurs réseau (12, 14, 16, 18) interconnectés par ces segments de transmission (20) et des nœuds de calcul ou service (30, 32, 34) connectés à des ports d'au moins une partie (14, 16, 18) des commutateurs réseau, le procédé, exécuté par un serveur (32) d'attribution automatique d'adresses topologiques individuelles, comportant l'obtention (100), par le serveur d'attribution (32) à partir de données d'une base de données d'administration (34), de premières adresses topologiques individuelles exprimées dans un système d'adressage non hiérarchisé pour tous les commutateurs réseau (12, 14, 16, 18), chaque première adresse topologique individuelle comportant N identifiants, N ≥ 2, dont :
- un identifiant, prenant une valeur numérique entière, d'un niveau hiérarchique du commutateur réseau auquel elle est associée dans le réseau (10), et
- N-1 identifiant(s) non hiérarchisé(s) du commutateur réseau auquel elle est associée dans le réseau (10),
**caractérisé en ce qu'**il comporte en outre le transcodage (102, 104), exécuté par un transcodeur (38) du serveur d'attribution (32), de chaque première adresse topologique individuelle en une deuxième adresse topologique individuelle hiérarchisée selon les étapes de transcodage suivantes :
- subdivision (102) du ou des N-1 identifiant(s) non hiérarchisé(s) de commutateur :
• en i identifiant(s) de sous-topologie, 0 ≤ i ≤ N-1, séparés entre eux lorsqu'ils sont au moins deux par au moins un premier caractère séparateur de niveaux hiérarchiques, formant ainsi une première chaîne de caractères, et
• en j identifiant(s) de commutateur, j = N-1-i, séparés entre eux lorsqu'ils sont au moins deux par au moins un deuxième caractère séparateur d'identifiants différent du premier caractère séparateur, formant ainsi une deuxième chaîne de caractères,
où j, et donc i, est un nombre entier déterminé en fonction de la valeur de l'identifiant de niveau hiérarchique,
- constitution (104) de la deuxième adresse topologique individuelle hiérarchisée par une concaténation de caractères incluant au moins la première chaîne de caractères, la deuxième chaîne de caractères, ainsi qu'un troisième caractère séparateur entre les première et deuxième chaînes de caractères.

2. Procédé d'attribution automatique d'adresses topologiques individuelles selon la revendication 1, dans lequel :
- les premières adresses topologiques individuelles sont exprimées dans un système d'adressage en N-uplet,
- l'identifiant de niveau hiérarchique de chaque première adresse topologique individuelle forme une première composante du N-uplet et prend une valeur en relation affine avec j, et
- le ou les N-1 identifiant(s) non hiérarchisé(s) de commutateur de chaque adresse topologique individuelle forme(nt) le ou les N-1 autre(s) composante(s) du N-uplet.

3. Procédé d'attribution automatique d'adresses topologiques individuelles selon la revendication 1 ou 2, dans lequel la valeur que prend l'identifiant de niveau hiérarchique de chaque première adresse topologique individuelle :
- est comprise entre 0 et N-1, la valeur 0 étant réservée aux commutateurs réseau ayant au moins un port auquel est connecté au moins un nœud de calcul ou service, et
- est égale à j.

4. Procédé d'attribution automatique d'adresses topologiques individuelles selon l'une quelconque des revendications 1 à 3, dans lequel l'obtention (100) des premières adresses topologiques individuelles des commutateurs réseau (12, 14, 16, 18) comporte la détermination automatique de l'identifiant de niveau hiérarchique de chaque commutateur réseau par attribution à cet identifiant d'une valeur égale au minimum entre N-1 et le nombre minimal d'autres commutateurs réseau qui doivent être traversés pour atteindre l'un quelconque des nœuds de calcul ou service (30, 32, 34) à partir du commutateur réseau considéré.

5. Procédé d'attribution automatique d'adresses topologiques individuelles selon l'une quelconque des revendications 1 à 4, comportant en outre l'enregistrement (106) des deuxièmes adresses topologiques individuelles hiérarchisées dans un dispositif de stockage (34) sous l'un des formats suivants :
- dans un système de répertoires et fichiers informatiques automatiquement constitué à l'aide des deuxièmes adresses topologiques individuelles hiérarchisées, elles-mêmes automatiquement enregistrées dans ce système de répertoires et fichiers à partir de la succession de premier(s) séparateur(s) et de chaque identifiant de sous-topologie qu'elles contiennent, ou
- dans un système de base de données, les deuxièmes adresses topologiques individuelles hiérarchisées étant accessibles dans ce système de base de données à l'aide de clés d'accès définies à partir de la succession de premier(s) séparateur(s) et de chaque identifiant de sous-topologie que les deuxièmes adresses topologiques individuelles hiérarchisées contiennent, ou
- dans un système de table de hachage indexée par des clés définies à partir de la succession de premier(s) séparateur(s) et de chaque identifiant de sous-topologie que les deuxièmes adresses topologiques individuelles hiérarchisées contiennent.

6. Procédé d'attribution automatique d'adresses topologiques individuelles selon l'une quelconque des revendications 1 à 5, dans lequel un autre premier caractère séparateur est ajouté en tête de chaque deuxième adresse topologique individuelle hiérarchisée pour identifier la racine d'une structure arborescente définie par l'ensemble des deuxièmes adresses topologiques individuelles hiérarchisées.

7. Procédé d'attribution automatique d'adresses topologiques individuelles selon l'une quelconque des revendications 1 à 6, dans lequel le premier caractère séparateur est un trait oblique « / », le deuxième caractère séparateur est un point « . », le troisième caractère séparateur est identique au premier caractère séparateur et chaque identifiant, de sous-topologie ou de commutateur, de chaque deuxième adresse topologique individuelle hiérarchisée est un nombre entier.

8. Programme d'ordinateur téléchargeable depuis un réseau de communication et/ou enregistré sur un support lisible par ordinateur et/ou exécutable par un processeur, **caractérisé en ce qu'**il comprend des instructions pour l'exécution des étapes d'un procédé d'attribution automatique d'adresses topologiques individuelles selon l'une quelconque des revendications 1 à 7, lorsque ledit programme est exécuté sur un ordinateur.

9. Serveur (32) d'attribution automatique d'adresses topologiques individuelles à des commutateurs réseau (12, 14, 16, 18) d'un réseau (10) comportant des segments de transmission (20), lesdits commutateurs réseau (12, 14, 16, 18) interconnectés par ces segments de transmission (20) et des nœuds de calcul ou service (30, 32, 34) connectés à des ports d'au moins une partie des commutateurs réseau (12, 14, 16, 18), le serveur d'attribution (32) comportant des moyens (36) d'obtention, à partir de données d'une base de données d'administration (34), de premières adresses topologiques individuelles exprimées dans un système d'adressage non hiérarchisé pour tous les commutateurs réseau (12, 14, 16, 18), chaque adresse topologique individuelle comportant N identifiants, N ≥ 2, dont :
- un identifiant, prenant une valeur numérique entière, d'un niveau hiérarchique du commutateur réseau auquel elle est associée dans le réseau (10), et
- N-1 identifiant(s) non hiérarchisé(s) du commutateur réseau auquel elle est associée dans le réseau (10),
**caractérisé en ce qu'**il comporte en outre un transcodeur (38) de chaque première adresse topologique individuelle en une deuxième adresse topologique individuelle hiérarchisée selon les règles prédéfinies de transcodage suivantes :
- subdivision du ou des N-1 identifiant(s) non hiérarchisé(s) de commutateur :
• en i identifiant(s) de sous-topologie, 0 ≤ i ≤ N-1, séparés entre eux lorsqu'ils sont au moins deux par au moins un premier caractère séparateur de niveaux hiérarchiques, formant ainsi une première chaîne de caractères, et
• en j identifiant(s) de commutateur, j = N-1-i, séparés entre eux lorsqu'ils sont au moins deux par au moins un deuxième caractère séparateur d'identifiants différent du premier caractère séparateur, formant ainsi une deuxième chaîne de caractères,
où j, et donc i, est un nombre entier déterminé en fonction de la valeur de l'identifiant de niveau hiérarchique,
- constitution de la deuxième adresse topologique individuelle hiérarchisée par une concaténation de caractères incluant au moins la première chaîne de caractères, la deuxième chaîne de caractères, ainsi qu'un troisième caractère séparateur entre les première et deuxième chaînes de caractères.

10. Grappe de serveurs (10) comportant des segments de transmission (20), des commutateurs réseau (12, 14, 16, 18) interconnectés par ces segments de transmission (20) et des nœuds de calcul et de service (30, 32, 34) connectés à des ports d'au moins une partie des commutateurs réseau (12, 14, 16, 18), dans laquelle au moins un nœud de service est un serveur (32) d'attribution automatique d'adresses topologiques individuelles selon la revendication 9.

## Patentansprüche

1. Verfahren zur automatischen Vergabe von individuellen topologischen Adressen an Netzwerk-Switches (12, 14, 16, 18) eines Netzwerks (10), das Übertragungssegmente (20), die Netzwerk-Switches (12, 14, 16, 18), die durch diese Übertragungssegmente (20) miteinander verbunden sind, und Berechnungs- oder Dienstknoten (30, 32, 34), die mit Anschlüssen mindestens eines Teils (14, 16, 18) der Netzwerk-Switches verbunden sind, beinhaltet, wobei das Verfahren, das durch einen Server (32) zur automatischen Vergabe von individuellen topologischen Adressen ausgeführt wird, den Erhalt (100) durch den Vergabeserver (32) aus Daten einer Verwaltungsdatenbank (34) erster individueller topologischer Adressen beinhaltet, die in einem nicht hierarchisierten Adressierungssystem für alle Netzwerk-Switches (12, 14, 16, 18) ausgedrückt sind, wobei jede erste individuelle topologische Adresse N Benutzernamen beinhaltet, mit N ≥ 2, darunter:
- einen Benutzernamen, der einen Ganzzahlenwert einer hierarchischen Stufe des Netzwerk-Switches annimmt, dem er in dem Netzwerk (10) zugewiesen ist, und
- N-1 nicht hierarchisierte(r) Benutzername(n) des Netzwerk-Switches dem er in dem Netzwerk (10) zugewiesen ist,
**dadurch gekennzeichnet, dass** es weiter die Transcodierung (102, 104), die durch einen Transcodierer (38) des Vergabeservers (32) ausgeführt wird, jeder ersten individuellen topologischen Adresse in eine zweite hierarchisierte individuelle topologische Adresse gemäß den folgenden Transcodierungsschritten beinhaltet:
- Unterteilung (102) des oder der N-1 nicht hierarchisierten Benutzernamen(s) eines Switches:
• in i Benutzername(n) einer Teiltopologie, 0 ≤ i ≤ N-1, die, wenn sie mindestens zwei sind, durch mindestens ein erstes Trennzeichen hierarchischer Stufen voneinander getrennt sind, wodurch eine erste Zeichenkette gebildet wird, und
• in j Benutzername(n) eines Switches, j = N-1-i, die, wenn sie mindestens zwei sind, durch mindestens ein zweites Trennzeichen von Benutzernamen, das sich von dem ersten Trennzeichen unterscheidet, voneinander getrennt sind, wodurch eine zweite Zeichenkette gebildet wird,
wobei j, und somit i eine Ganzzahl ist, die in Abhängigkeit von dem Wert des Benutzernamens einer hierarchischen Stufe bestimmt wird,
- Bilden (104) der zweiten hierarchisierten individuellen topologischen Adresse durch eine Verknüpfung von Zeichen, die mindestens die erste Zeichenkette, die zweite Zeichenkette, sowie ein drittes Trennzeichen zwischen der ersten und zweiten Zeichenkette beinhaltet.

2. Verfahren zur automatischen Vergabe von individuellen topologischen Adressen nach Anspruch 1, wobei:
- die ersten individuellen topologischen Adressen in einem Adressierungssystem als N-Tupel ausgedrückt sind,
- der Benutzername einer hierarchischen Stufe jeder ersten individuellen topologischen Adresse eine erste Komponente des N-Tupels bildet und einen Wert in affiner Beziehung mit j annimmt, und
- der oder die N-1 nicht hierarchisierte(n) Benutzername(n) eines Switches einer jeden individuellen topologischen Adresse den oder die andere(n) N-1 Komponente(n) des N-Tupels bildet (bilden).

3. Verfahren zur automatischen Vergabe von individuellen topologischen Adressen nach Anspruch 1 oder 2, wobei der Wert, den der Benutzername einer hierarchischen Stufe jeder ersten individuellen topologischen Adresse annimmt:
- zwischen 0 und N-1 enthalten ist, wobei der Wert 0 den Netzwerk-Switches vorbehalten ist, die mindestens einen Anschluss aufweisen, mit dem mindestens ein Berechnungs- oder Dienstknoten verbunden ist, und
- gleich j ist.

4. Verfahren zur automatischen Vergabe von individuellen topologischen Adressen nach einem der Ansprüche 1 bis 3, wobei der Erhalt (100) der ersten individuellen topologischen Adressen der Netzwerk-Switches (12, 14, 16, 18) die automatische Bestimmung des Benutzernamens einer hierarchischen Stufe jedes Netzwerk-Switches durch Vergeben an diesen Benutzernamen eines Wertes gleich dem Minimum zwischen N-1 und der minimalen Anzahl anderer Netzwerk-Switches beinhaltet, die zu durchqueren sind, um irgendeinen der Berechnungs- oder Dienstknoten (30, 32, 34) ab dem betrachteten Netzwerk-Switch zu erreichen.

5. Verfahren zur automatischen Vergabe von individuellen topologischen Adressen nach einem der Ansprüche 1 bis 4, weiter das Speichern (106) der zweiten hierarchisierten individuellen topologischen Adressen in einer Ablagevorrichtung (34) unter einem der folgenden Formate beinhaltend:
- in einem System an Computer-Verzeichnissen und - Dateien, das automatisch mithilfe der zweiten hierarchisierten individuellen topologischen Adressen gebildet wird, die selbst automatisch in diesem System an Verzeichnissen und Dateien ab der Aufeinanderfolge von (einem) ersten Trenner(n) und jedes Benutzernamens einer Teiltopologie, die sie enthalten, gespeichert werden, oder
- in einem System einer Datenbank, wobei die zweiten hierarchisierten individuellen topologischen Adressen in diesem System einer Datenbank mithilfe von Zugangsschlüsseln zugänglich sind, die ab der Aufeinanderfolge von (einem) ersten Trenner(n) und jedes Benutzernamens einer Teiltopologie, die die zweiten hierarchisierten individuellen topologischen Adressen enthalten, definiert werden, oder
- in einem System einer Hashtabelle, die durch Schlüssel indexiert ist, die ab der Aufeinanderfolge von (einem) ersten Trenner(n) und jedes Benutzernamens einer Teiltopologie, die die zweiten hierarchisierten individuellen topologischen Adressen enthalten, definiert sind.

6. Verfahren zur automatischen Vergabe von individuellen topologischen Adressen nach einem der Ansprüche 1 bis 5, wobei ein anderes erstes Trennzeichen am Kopf jeder zweiten hierarchisierten individuellen topologischen Adresse hinzugefügt wird, um die Wurzel einer durch die Einheit der zweiten hierarchisierten individuellen topologischen Adressen definierten Baumstruktur zu identifizieren.

7. Verfahren zur automatischen Vergabe von individuellen topologischen Adressen nach einem der Ansprüche 1 bis 6, wobei das erste Trennzeichen ein Schrägstrich "/" ist, das zweite Trennzeichen ein Punkt "." ist, das dritte Trennzeichen gleich wie das erste Trennzeichen ist, und jeder Benutzername einer Teiltopologie oder eines Switches jeder zweiten hierarchisierten individuellen topologischen Adresse eine Ganzzahl ist.

8. Aus einem Kommunikationsnetzwerk herunterladbares und/oder auf einem computerlesbaren Datenträger gespeichertes und/oder von einem Prozessor ausführbares Computerprogramm, **dadurch gekennzeichnet, dass** es Anweisungen für die Ausführung der Schritte eines Verfahrens zur automatischen Vergabe von individuellen topologischen Adressen nach einem der Ansprüche 1 bis 7 umfasst, wenn das Programm auf einem Computer ausgeführt wird.

9. Server (32) zur automatischen Vergabe von individuellen topologischen Adressen an Netzwerk-Switches (12, 14, 16, 18) eines Netzwerks (10), das Übertragungssegmente (20), die Netzwerk-Switches (12, 14, 16, 18), die durch diese Übertragungssegmente (20) miteinander verbunden sind, und Berechnungs- oder Dienstknoten (30, 32, 34), die mit Anschlüssen mindestens eines Teils (12, 14, 16, 18) der Netzwerk-Switches verbunden sind, beinhaltet, wobei der Vergabeserver (32) Mittel (36) zum Erhalten aus Daten einer Verwaltungsdatenbank (34) erster individueller topologischer Adressen beinhaltet, die in einem nicht hierarchisierten Adressierungssystem für alle Netzwerk-Switches (12, 14, 16, 18) ausgedrückt sind, wobei jede individuelle topologische Adresse N Benutzernamen beinhaltet, mit N ≥ 2, darunter:
- einen Benutzernamen, der einen Ganzzahlenwert einer hierarchischen Stufe des Netzwerk-Switches annimmt, dem er in dem Netzwerk (10) zugewiesen ist, und
- N-1 nicht hierarchisierte(r) Benutzername(n) des Netzwerk-Switches dem er in dem Netzwerk (10) zugewiesen ist,
**dadurch gekennzeichnet, dass** er weiter einen Transcodierer (38) jeder ersten individuellen topologischen Adresse in eine zweite hierarchisierte individuelle topologische Adresse gemäß den folgenden vorab definierten Transcodierungsregeln beinhaltet:
- Unterteilung des oder der N-1 nicht hierarchisierten Benutzernamen(s) eines Switches:
• in i Benutzername(n) einer Teiltopologie, 0 ≤ i ≤ N-1, die, wenn sie mindestens zwei sind, durch mindestens ein erstes Trennzeichen hierarchischer Stufen voneinander getrennt sind, wodurch eine erste Zeichenkette gebildet wird, und
• in j Benutzername(n) eines Switches, j = N-1-i, die, wenn sie mindestens zwei sind, durch mindestens ein zweites Trennzeichen von Benutzernamen, das sich von dem ersten Trennzeichen unterscheidet, voneinander getrennt sind, wodurch eine zweite Zeichenkette gebildet wird, wobei j, und somit i eine Ganzzahl ist, die in Abhängigkeit von dem Wert des Benutzernamens einer hierarchischen Stufe bestimmt wird,
- Bilden der zweiten hierarchisierten individuellen topologischen Adresse durch eine Verknüpfung von Zeichen, die mindestens die erste Zeichenkette, die zweite Zeichenkette, sowie ein drittes Trennzeichen zwischen der ersten und zweiten Zeichenkette beinhaltet.

10. Serverfarm (10), die Übertragungssegmente (20), Netzwerk-Switches (12, 14, 16, 18), die durch diese Übertragungssegmente (20) miteinander verbunden sind, und Berechnungs- und Dienstknoten (30, 32, 34), die mit Anschlüssen mindestens eines Teils der Netzwerk-Switches (12, 14, 16, 18) verbunden sind, beinhaltet, wobei mindestens ein Dienstknoten ein Server (32) zur automatischen Vergabe individueller topologischer Adressen nach Anspruch 9 ist.

## Claims

1. Method for automatically assigning individual topological addresses to network switches (12, 14, 16, 18) of a network (10) comprising transmission segments (20), said network switches (12, 14, 16, 18) interconnected via these transmission segments (20) and compute or service nodes (30, 32, 34) connected to ports of at least one portion (14, 16, 18) of the network switches, the method, executed by a server (32) for automatically assigning individual topological addresses, comprising obtaining (100), by the assigning server (32) from data of an administration database (34), first individual topological addresses expressed in a non-hierarchical addressing system for all of the network switches (12, 14, 16, 18), each first individual topological address comprising N identifiers, N ≥ 2, including:
- one identifier, which takes a integer numerical value, of a hierarchical level of the network switch with which it is associated in the network (10), and
- N-1 non-hierarchical identifier(s) of the network switch with which it is associated in the network (10),
**characterized in that** it further comprises the transcoding (102, 104), executed by a transcoder (38) of the assigning server (32), of each first individual topological address into a second hierarchical individual topological address according to the following transcoding steps of:
- subdividing (102) the N-1 non-hierarchical switch identifier(s):
• into i sub-topology identifier(s), 0 ≤ i ≤ N-1, separated from one another when there are at least two thereof by at least one first hierarchical level separator character, thus forming a first character string, and
• into j switch identifier(s), j = N-1-i, separated from one another when there are at least two thereof by at least one second identifier separator character that is different from the first separator character, thus forming a second character string,
wherein j, and therefore i, is an integer which is determined as a function of the value of the hierarchical level identifier,
- constituting (104) the second hierarchical individual topological address by a concatenation of characters including at least the first character string, the second character string, and a third separator character between the first and second character strings.

2. Method for automatically assigning individual topological addresses according to claim 1, wherein:
- the first individual topological addresses are expressed in an addressing system in N-tuple,
- the hierarchical level identifier identifying the hierarchical level of each first individual topological address forms a first component of the N-tuple and takes on a value in an affine relationship with j, and
- the N-1 non-hierarchical switch identifier(s) of each individual topological address forms (form) the N-1 other component(s) of the N-tuple.

3. Method for automatically assigning individual topological addresses according to claim 1 or 2, wherein the value taken by the hierarchical level identifier of each first individual topological address:
- lies in the range 0 to N-1, whereby the value 0 is reserved to the network switches having at least one port to which at least one compute or service node is connected, and
- is equal to j.

4. Method for automatically assigning individual topological addresses according to any of claims 1 to 3, wherein obtaining (100) the first individual topological addresses of the network switches (12, 14, 16, 18) comprises automatically determining the hierarchical level identifier of each network switch by assigning to said identifier a value equal to the minimum between N-1 and the minimum number of other network switches that must be passed in order to reach any one of the compute or service nodes (30, 32, 34) from the network switch considered.

5. Method for automatically assigning individual topological addresses according to any of claims 1 to 4, further comprising the recording (106) of the second hierarchical individual topological addresses in a storage device (34) in one of the following formats:
- in a system of directories and computer files automatically constituted using the second hierarchical individual topological addresses, which are themselves automatically recorded in this system of directories and files from the succession of first separator(s) and of each sub-topology identifier that they contain, or
- in a database system, the second hierarchical individual topological addresses being accessible in said database system using access keys defined from the succession of first separator(s) and of each sub-topology identifier that the second hierarchical individual topological addresses contain, or
- in a hash table system indexed by keys defined from the succession of first separator(s) and of each sub-topology identifier that the second hierarchical individual topological addresses contain.

6. Method for automatically assigning individual topological addresses according to any of claims 1 to 5, wherein another first separator character is added at the head of each second hierarchical individual topological address in order to identify the root of a tree structure defined by the set of the second hierarchical individual topological addresses.

7. Method for automatically assigning individual topological addresses according to any of claims 1 to 6, wherein the first separator character is a slash "/", the second separator character is a period ".", the third separator character is identical to the first separator character and each sub-topology identifier or switch identifier of each second hierarchical individual topological address is an integer.

8. Computer program that can be downloaded from a communication network and/or saved on a computer-readable medium and/or executable by a processor, **characterized in that** it comprises instructions for carrying out the steps of a method for automatically assigning individual topological addresses according to any of claims 1 to 7, when said program is executed on a computer.

9. Server (32) for automatically assigning individual topological addresses to network switches (12, 14, 16, 18) of a network (10) comprising transmission segments (20), said network switches (12, 14, 16, 18) interconnected via these transmission segments (20) and compute or service nodes (30, 32, 34) connected to ports of at least one portion of the network switches (12, 14, 16, 18), the assignment server (32) comprising means (36) for obtaining, from data of an administration database (34), first individual topological addresses expressed in a non-hierarchical addressing system for all of the network switches (12, 14, 16, 18), each individual topological address comprising N identifiers, N ≥ 2, including:
- one identifier, which takes a integer numerical value, of a hierarchical level of the network switch with which it is associated in the network (10), and
- N-1 non-hierarchical identifier(s) of the network switch with which it is associated in the network (10),
**characterized in that** it further comprises a transcoder (38) transcoding each first individual topological address into a second hierarchical individual topological address according to the following predefined transcoding rules of:
- subdividing the N-1 non-hierarchical switch identifier(s):
• into i sub-topology identifier(s), 0 ≤ i ≤ N-1, separated from one another when there are at least two thereof by at least one first hierarchical level separator character, thus forming a first character string, and
• into j switch identifier(s), j = N-1-i, separated from one another when there are at least two thereof by at least one second identifier separator character that is different from the first separator character, thus forming a second character string,
wherein j, and therefore i, is an integer which is determined as a function of the value of the hierarchical level identifier,
- constituting the second hierarchical individual topological address by a concatenation of characters including at least the first character string, the second character string, and a third separator character between the first and second character strings.

10. Cluster of servers (10) comprising transmission segments (20), network switches (12, 14, 16, 18) interconnected via these transmission segments (20) and compute and service nodes (30, 32, 34) connected to ports of at least one portion of the network switches (12, 14, 16, 18), wherein at least one service node is a server (32) for automatically assigning individual topological addresses according to claim 9.
